# EUROPÄISCHE PATENTANMELDUNG

(11) **EP 1 760 874 A2**
(43) Veröffentlichungstag der Anmeldung: **07.03.2007**
(21) Anmeldenummer: 06119623.4
(22) Anmeldetag: 28.08.2006
(51) Int. Cl.: H02P 3/06

(54) **Steuervorrichtung eines Elektrogerätes des Heim- oder Gartenbereiches**

(30) Priorität: 29.08.2005 DE 102005040798
(71) Anmelder: Hanning Elektro-Werke GmbH & Co. KG, 33813 Oerlinghausen (DE)
(72) Erfinder: Henke, Thomas, 33829, Borgholzhausen (DE); Schaefer, Wieland, 33758, Schloss Holte - Stukenbrock (DE)
(74) Vertreter: Dantz, Jan Henning

(57) **Zusammenfassung**

Eine Steuervorrichtung eines von einer Spannungsquelle versorgten, vorzugsweise handgeführten, Elektrogerätes (1) des Heim- oder Gartenbereiches oder Fahrzeuges, mit einem elektronisch angesteuerten Motor (2), weist folgendes auf: eine Betätigungseinrichtung (4) zur Ein- und Ausschaltung des Elektrogeräts (1); einen Zwischenkreis (6) zur Pufferung einer Versorgungsspannung der Spannungsquelle (3); eine Leistungsstufe (7) zur Leistungsversorgung des Motors (2); ein Zeitglied (8) zur Ausschaltverzögerung der Versorgungsspannung; und eine Steuereinheit (5) zur Steuerung des Motors (2), wobei die Betätigungseinrichtung (4) mit einer Verknüpfungseinrichtung (9) in Verbindung steht, welche mit der Steuereinheit (5) und dem Zeitglied (8) verbunden ist, und ein entsprechendes Verfahren dazu.

## Beschreibung

Die Erfindung betrifft eine Steuervorrichtung eines von einer Spannungsquelle versorgten, vorzugsweise handgeführten, Elektrogerätes des Heim- oder Gartenbereiches oder Fahrzeuges, mit einem elektronisch angesteuerten Motor und ein Verfahren zum Steuern des Elektrogerätes.

Derartige Elektrogeräte können insbesondere Bohrmaschinen, Akkuschrauber, Rasenmäher, Elektromotorsensen usw. sein. Dieses sind bekannte Geräte, die im Heim- und Gartenbereich, aber auch im Handwerk und im Haushalt häufig Verwendung finden. Sie werden entweder direkt über einen Hauptschalter oder über ein unmittelbar mit dem Hauptschalter gekoppeltes elektromagnetisches Relais ein- und ausgeschaltet. Der manuell zu betätigende Hautschalter ist dabei zum Beispiel als Kippschalter (bei Schleif- und Trennwerkzeugen), als Taster (bei Bohrmaschinen, Akkuschrauber) oder als Griffbügel (Rasenmäher u. dgl.) ausgebildet. Weitere Geräte der genannten Art sind beispielsweise Golfbuggys, Krankenfahrstühle und andere derartige Fahrzeuge.

Bei der überwiegenden Mehrzahl von derartigen Geräten darf gemäß einschlägigen Sicherheitsnormen ein freies Auslaufen des Werkzeugs nach dem Ausschalten nicht auftreten. Dazu wird entweder eine mechanisch wirkende Bremse eingesetzt oder im Antriebsmotor, beispielsweise durch Kurzschließen der Wicklungen, ein Bremsmoment erzeugt, um beim Ausschalten ein schnellstmögliches Abbremsen bis auf Stillstand des Werkzeugs zu gewährleisten. Weiterhin besteht bei nicht bestimmungsgemäßem Betrieb die Gefahr von schweren Personen- oder Sachschäden. Daher sind viele dieser Geräte mit Schutzvorrichtungen ausgestattet, die ein unbeabsichtigtes Loslaufen des Werkzeugs verhindern. Solche Schutzvorrichtungen müssen auch in Kombination mit auf Software basierenden Steuerungen unter allen Umständen ihre Funktion behalten.

In derartigen Elektrogeräten werden als Antriebseinheiten in zunehmendem Maß elektronisch kommutierte Elektromotoren eingesetzt. Diese auch als BLDC (Brushless Direct Current = bürstenlose Gleichstrom-) bezeichnete Motoren zeichnen sich durch eine kompakte Bauform und einen energiesparenden und praktisch wartungsfreien Betrieb aus.

Diese elektronische Ansteuerung der Motoren bietet neben der Drehzahlverstellung und Drehzahl- und/oder Drehmomenteinstell- und regelbarkeit den zusätzlichen Vorteil, durch geeignete Bestromung der Motorwicklungen ein Bremsmoment zu erzeugen und den Motor in kürzester Zeit bis zum Stillstand abzubremsen. Dieses setzt jedoch voraus, dass nach Ausschalten des Hauptschalters die Energiezufuhr noch so lange aufrecht erhalten bleibt, bis der Bremsvorgang abgeschlossen ist.

Bei Einsatz solcher Akkusysteme in Kombination mit Antrieben mit großem Drehmoment sind zusätzliche Randbedingungen zu beachten. So sind die beim Einschalten oder bei getaktetem Betrieb auftretenden hohen Stromimpulse möglichst zu begrenzen, um die Zellen des Akkumulators nicht zu zerstören oder zu schädigen, und um ihre Lebensdauer und Ladezyklen zu verlängern. Nach Ausschalten des Gerätes sind alle Verbraucher von der Akkuversorgung zu trennen, damit sich der Akku bei Lagerung des Geräts nicht bereits nach kurzer Zeit zum Beispiel über die Steuerung des Werkzeugs entlädt.

Elektronische Vorrichtungen, die nach dem Ausschalten des Geräts die Energiezufuhr noch für eine bestimmte Zeit aufrechterhalten, sind vorwiegend aus der Unterhaltungselektronik bekannt. Neben dem so genannten "Stand-By-Betrieb" gibt es hier auch Schaltungsprinzipien, die bei Nichtgebrauch des Geräts nach einer definierten Zeit die Hauptversorgung unterbrechen.

Bei Geräten mit geringer Leistungsaufnahme (batteriebetriebene Geräte wie zum Beispiel Taschenrechner und Personenwaagen) erfolgt dies üblicherweise über elektronische Halbleiterschalter (Transistoren, TRIAC, o.ä.). Bei Geräten mit höherer Leistungsaufnahme (zum Beispiel Fernsehempfänger) sind auch Vorrichtungen gebräuchlich, die nach einer definierten Zeit einen elektromagnetisch gehaltenen Hauptschalter lösen, so dass dieser in die "AUS-Stellung" zurückspringt.

Die DE 10228129 A1 beschreibt ein kabelloses Elektrogerät mit einem BLDC-Motor und zugehöriger Steuerung.

Ein weiteres Beispiel zeigt DE 69905036 T2 als ein tragbares Elektrogerät in unterschiedlichen Ausführungen mit einem Wechselstrom- oder BLDC-Motor. Es wird eine dazugehörige Steuerung mit Softstart, Drehzahlbeeinflussung und dergleichen auf Softwarebasis beschrieben. Weiterhin ist eine Leistungsstufe zur Ansteuerung eines BLDC-Motors erläutert.

Zum Stand der Technik werden noch die DE 198 25 801 C2 und die WO/2000/62393 A1 genannt.

Die Aufgabe der vorliegenden Erfindung besteht darin, das Elektrogerät und dessen Steuervorrichtung, insbesondere mit einem elektronisch kommutierten Motor so weiterzuentwickeln, dass es die vorstehend beschriebenen Anforderungen durch eine Kombination von durch Hardware und Software gesteuerten Funktionen insbesondere bei Akkuversorgung des Werkzeugs erfüllt. Es soll ferner ein geeignetes Steuerungsverfahren zum Steuern des Elektrogerätes geschaffen werden.

Diese Aufgabe wird durch den Gegenstand des Anspruchs 1 und des Anspruchs 11 gelöst.

Vorteilhafte Ausgestaltungen der Erfindung sind den Unteransprüchen zu entnehmen.

Die der Erfindung zugrunde liegende Idee besteht darin, einen Zwischenkreis zwischen Spannungsversorgung und einer Leistungsstufe des BLDC-Motors vorzusehen, welcher beim Einschalten mittels eines begrenzten Stroms geladen wird, bevor eine Freigabe zum Einschalten des BLDC-Motors von einer Steuereinheit erfolgt. Dabei wird ein bewährtes Leistungsschaltelement verwendet, das nach erfolgter Freigabe die Leistungsversorgung einschaltet. Weiterhin ist dieses Leistungsschaltelement vorteilhaft einerseits von der Steuereinheit und bei Ausfall der Steuereinheit durch ein Zeitglied ausschaltbar.

Der Zwischenkreis ermöglicht es vorteilhaft, da dieser von der Betätigungseinrichtung beim Einschalten zunächst mit einem kleinen Strom aufgeladen wird, dass bei einem unbeabsichtigten Einschalten der Motor nicht startet.

Weiterhin ist es vorteilhaft, dass die Betätigungsvorrichtung über eine Verknüpfungseinrichtung mit dem Zeitglied zur Ausschaltverzögerung und der Steuereinheit verbunden ist, da sich so eine einfache Verknüpfung ergibt, woraus eine Ausschaltung der Betätigungseinrichtung sowohl durch die Steuereinheit als auch im Fehlerfall der Steuereinheit dann durch das Zeitglied möglich ist.

Dabei ist es außerdem von Vorteil, dass die Betätigungseinrichtung ein Bedienungselement und ein Leistungsschaltelement mit mindestens einem Schaltkontakt aufweist, welche jeweils mit einem ersten Anschluss mit der Spannungsquelle verbunden sind, wobei das Leistungsschaltelement als elektromechanisches Bauteil oder als ein Halbleiterschalter ausgebildet ist, und wobei das Bedienungselement mit seinem zweiten Anschluss über einen Widerstand mit dem Zwischenkreis verbunden ist.

Somit ist in vorteilhaft einfacher Weise sichergestellt, dass der Zwischenkreis bei Betätigung des Bedienungselementes nur mit einem begrenzten Strom durch den Widerstand beaufschlagt wird, und das Leistungsschaltelement erst nach Freigabe durch die Steuereinheit diesen Begrenzungswiderstand überbrückt und den Zwischenkreis mit der Spannungsquelle direkt verbindet.

Hierbei ist es bevorzugt, dass das Leistungsschaltelement mit einem Anschluss über eine zweite Diode mit dem zweiten Anschluss des Bedienungselementes und über eine dritte Diode mit dem Zwischenkreis verbunden ist, woraus sich eine vorteilhaft einfache Ansteuerung des Leistungsschaltelementes durch die zweite Diode ergibt, die jedoch nur eine Einschaltung des Leistungsschaltelementes bewirkt, wenn die Steuereinheit ein Freigabe für den anderen Anschluss des Leistungsschaltelementes erteilt hat. Dieses dient zur sicheren Einschaltung, wobei ein unbeabsichtigtes Einschalten vorteilhaft verhindert wird.

Die dritte Diode ergibt bei einem eingeschalteten Leistungsschaltelement eine Selbsthaltung desselben, wenn das Bedienungselement zum Ausschalten des Elektrogeräts losgelassen wird. So bleibt das Leistungsschaltelement bis zum Ausschalten durch die Steuereinheit auf einfache Weise eingeschaltet, bis der Bremsvorgang des Motors durch Steuereinheit gesteuert abgeschlossen ist.

Hierbei ist es besonders bevorzugt, dass das Leistungsschaltelement der Betätigungseinrichtung von der Steuereinheit und von dem Zeitglied ausschaltbar ist, wobei es besonders vorteilhaft ist, dass das Leistungsschaltelement der Betätigungseinrichtung über das Zeitglied bei fehlerhafter Steuereinheit ausschaltbar ist.
Dadurch ergibt sich eine vorteilhafte zusätzliche Sicherheit des hardwaremäßigen Ausschaltens des Elektrogeräts auch bei Ausfall der Steuereinheit.

Hierbei ist es in bevorzugter Ausführung vorteilhaft, dass die Steuereinheit eine Spannung des Zwischenkreises und den in ihm fließenden Strom erfasst, da somit eine Freigabe und Einschaltung der Leistungsversorgung des Motors erst nach erfolgter Erfassung der Werte des Zwischenkreises möglich ist, was eine vorteilhafte Einschaltsicherung bietet.

Eine weitere Ausgestaltung sieht vor, dass der Motor eine Bremseinrichtung aufweist, die von der Steuereinheit und/oder von dem Zeitglied steuerbar ist. Dadurch ist es besonders vorteilhaft, den Motor bei Ausfall der Steuereinheit, die sonst einen Bremsvorgang elektronisch auf Software basierend steuert, nicht nur auszuschalten, sondern auch bis zum Stillstand zu bremsen, da diese Bremseinrichtung bei Ausfall der Steuereinheit von dem Zeitglied aktivierbar ist.

Es ist bevorzugt, dass das Zeitglied einstellbar ausgebildet ist, wodurch sich eine vorteilhafte Anpassung an unterschiedliche Elektrogeräte ergibt.

In bevorzugter Ausführung erfolgt beim Einschalten ein Aufladen eines Zwischenkreises zum Puffern einer Versorgungsspannung der Spannungsquelle, wobei ein Speicherelement, vorzugsweise ein Kondensator, mit einem über einen Widerstand begrenzten Strom aufgeladen wird. Dieses dient zur vorteilhaften Absicherung bei einem unbeabsichtigten Einschalten, was weiterhin vorteilhaft dadurch beeinflusst wird, dass das Starten des Motors erst dann erfolgt, wenn eine Spannung des Zwischenkreises erfasst worden ist.

In weiterer bevorzugter Ausgestaltung ist vorgesehen, dass bei der Betätigung der Betätigungseinrichtung zum Ausschalten des Elektrogeräts das Zeitglied gestartet wird, was sich besonders vorteilhaft darin auswirkt, dass weiterhin ein Bremsen des Motors und ein Ausschalten des Leistungsschaltelementes durch die Steuereinheit erfolgt.

Neben Krankenfahrstühlen eignet sich die Erfindung auch für andere Medizingeräte. Medizingeräte können einerseits die bereits Krankenfahrstühle sein. Daneben zu nennen sind insbesondere Verstellungen für Betten, Massageliegen, OP-Tische-, Zahnarzt und Gynäkologenstühle.

Weiterhin ist es vorteilhaft, dass das Zeitglied einstellbar ausgebildet ist, wodurch der Einsatzbereich der Erfindung erweitert wird.

Vorteilhafte Ausgestaltungen und Weiterbildungen der Erfindung sind Gegenstand der Unteransprüche sowie der Beschreibung unter Bezugnahme auf die Zeichnung.

Nachfolgend wird die Erfindung anhand der in den schematischen Figuren der Zeichnung angegebenen Ausführungsbeispiele näher erläutert. Es zeigt dabei:
- Figur 1: ein beispielhaftes Elektrogerät mit einer Steuervorrichtung;
- Figur 2: ein allgemeines Blockschaltbild einer Ausführungsform der Steuervorrichtung; und
- Figur 3: einen Schaltplan einer beispielhaften Ausführungsform der Steuervorrichtung.

Gleiche Komponenten oder Bauteile mit gleichen oder ähnlichen Funktionen sind in den Figuren mit gleichen Bezugszeichen versehen.

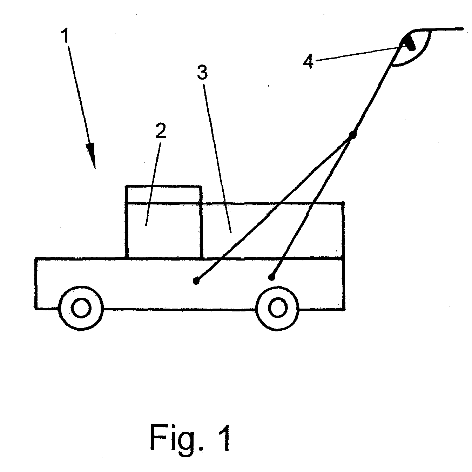

Fig. 1 zeigt ein beispielhaftes Elektrogerät 1 in Form eines Rasenmähers bzw. eines Geräts zur Rasenbearbeitung, das mit einem Motor 2 und einer Spannungsquelle 3 versehen ist, wobei der Motor 2 als ein bürstenloser Gleichstrommotor (BLDC-Motor) und die Spannungsquelle 3 als ein Akkumulator ausgebildet ist. Dieses Elektrogerät 1 ist in kabelloser Ausführung gestaltet, wobei während der Stillstandzeiten ein Kabel zur Aufladung des Akkumulators notwendig ist. Der Akkumulator kann aber auch entnommen und in eine Ladestation eingesetzt werden.

Das Elektrogerät 1 ist handgeführt, wozu bei dem dargestellten Rasenmäher ein entsprechendes Gestänge mit Handgriff(en) und einer Betätigungseinrichtung 4 angebracht ist. Mit der Betätigungseinrichtung 4 wird der Motor 2 des Elektrogeräts 1 über eine erfindungsgemäße Steuervorrichtung ein- und ausgeschaltet, wobei die Steuervorrichtung zum Beispiel in einem Gehäuse der Spannungsquelle 3 angeordnet sein kann und nicht gezeigt ist.

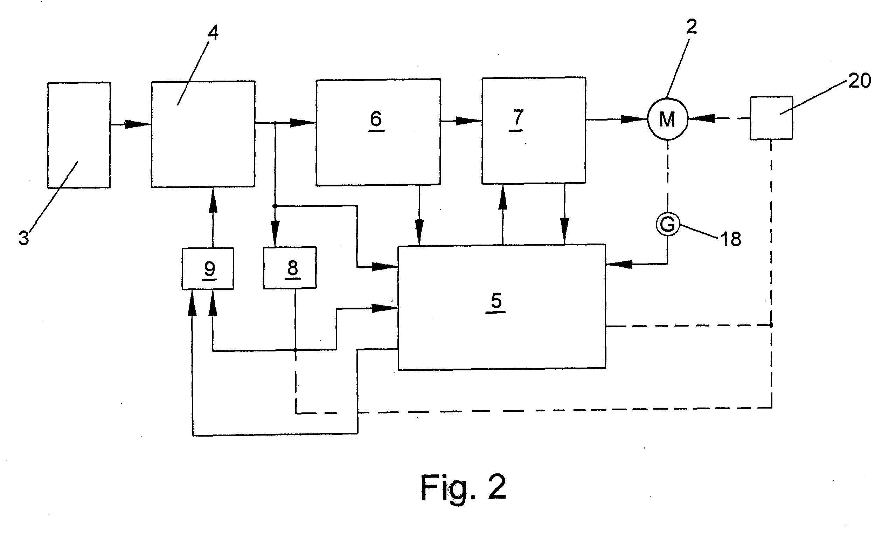

Einen beispielhaften Aufbau einer erfindungsgemäßen Steuervorrichtung zeigt Fig. 2 als ein Blockschaltbild. Hierbei ist die Spannungsquelle 3 mit der Betätigungseinrichtung 4 verbunden, welche ihrerseits an einem Zwischenkreis 6 angeschlossen ist, der im weiteren Verlauf mit einer Leistungsstufe 7 für den Motor 2 in Verbindung steht. Eine Steuereinheit 5 ist mit der Betätigungseinrichtung 4, dem Zwischenkreis 6 und der Leistungsstufe 7 verbunden. Es können auch noch weitere Verbindungen, beispielsweise zur Spannungsquelle 3, vorhanden sein.

Der Motor 2 ist mit einem Generator G zur Drehzahlerfassung 18 gekoppelt. Ein Signal der Drehzahlerfassung 18 wird der Steuereinheit 5 zugeleitet. Weiterhin ist in diesem Beispiel eine optionale Bremseinrichtung 20 vorgesehen, die mechanisch (gestrichelte Linie) auf den Motor 2 wirkt und einerseits mit der Steuereinheit 5 und einem Zeitglied 8 (gestrichelte Linie) in Verbindung steht.

Das Zeitglied 8 ist mit dem Ausgang der Betätigungseinrichtung 4 verbunden, wobei an diese Verbindung auch die Steuereinheit 5 angeschlossen ist. Der Ausgang des Zeitglieds 8 steht sowohl mit der Steuereinheit 5 als auch mit einem ersten Eingang einer Verknüpfungseinrichtung 9 in Verbindung. Ein zweiter Eingang der Verknüpfungseinrichtung 9 ist an die Steuereinheit 5 angeschlossen, wobei der Ausgang der Verknüpfungseinrichtung 9 mit der Betätigungseinrichtung 4 verbunden ist.

Im Folgenden wird die Funktion zunächst grob anhand der Fig. 2 beschrieben.

Die Betätigungseinrichtung 4 ermöglicht es, das Elektrogerät 1 mittels eines geeigneten Bedienungselementes ein- und auszuschalten, wobei die Spannungsquelle 3 mit dem Zwischenkreis zur Lieferung eines kleinen Stromwerts verbunden wird. Der Zwischenkreis wird durch die Spannungsquelle 3 zunächst auf einen bestimmten Spannungswert gemäß einer Ladezeit aufgeladen. Die Betätigung der Betätigungseinrichtung 4 erfasst die Steuereinheit 5 über ihre Verbindung zur Betätigungseinrichtung 4. Sobald ein bestimmter Wert der Zwischenkreisspannung erreicht ist, erfolgt durch die Steuereinheit eine Freigabe an die Betätigungseinrichtung 4 über die Verknüpfungseinrichtung 9, wobei die Betätigungseinrichtung 4 nun die Übertragung eines hohen Stromwerts auf den Zwischenkreis ermöglicht.

Die Steuereinheit 5 steuert darauf die Leistungsstufe 7 zum Starten und Betrieb des Motors 2, wobei das Signal der Drehzahlerfassung 18 eine Regelung der Motordrehzahl erlaubt. Eine Einstellung der Drehzahl mittels nicht gezeigter Einstellmittel an der Steuereinheit 5 ist bekannt und wird nicht weiter erläutert. Dies gilt auch für Start- und Bremsvorgänge des Motors 2.

Beim Ausschalten durch die Betätigungseinrichtung 4 wird dieses über die oben erwähnte Verbindung ihres Ausgangs an die Steuereinheit 5 übermittelt. Gleichzeitig erfolgt ein Start des Zeitglieds 8. Die Steuereinheit 5 wirkt auf die Leistungsstufe 7 so ein, dass der Motor 2 gebremst wird. Die Freigabe der Betätigungseinrichtung 4 wird von der Steuereinheit 5 erst dann unterbrochen, wenn der Motor 2 stillsteht.

Bei einem Fehler während des Motorbetriebs kann die Steuereinheit 5 sofort einen Bremsvorgang einleiten und die Betätigungseinrichtung 4 ausschalten.

Bei einem Ausfall der Steuereinheit 5 unterbricht das Zeitglied nach einer vorher festgelegten Zeit über die Verknüpfungseinrichtung 9 die Betätigungseinrichtung 4 zum Ausschalten. Eine Beeinflussung der Bremseinrichtung 20 ist über die gestrichelte Linie in einer weiteren Ausgestaltung möglich.

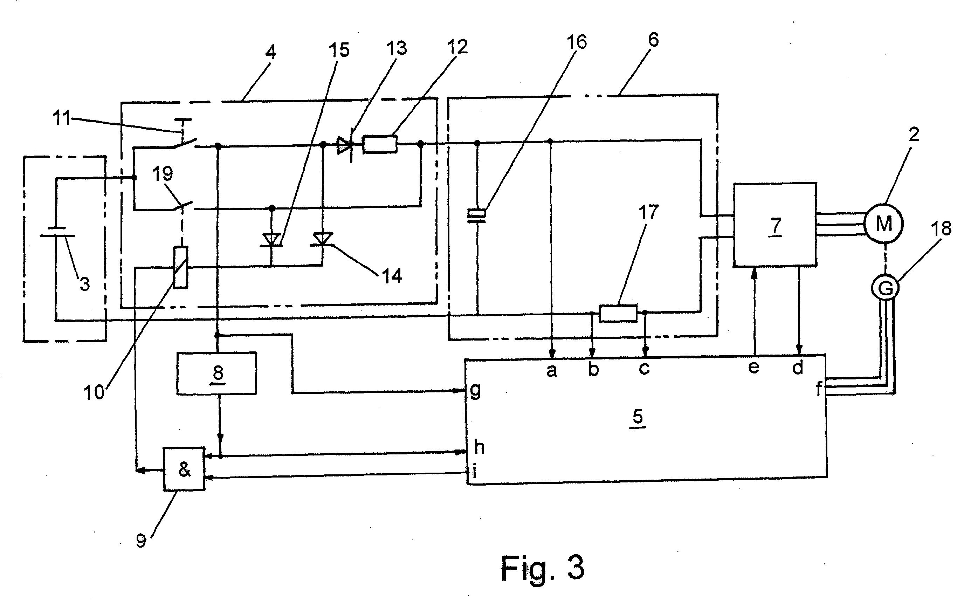

Fig. 3 zeigt einen Schaltplan, der das Blockschaltbild der Fig. 2 detaillierter darstellt.

In diesem Ausführungsbeispiel besteht die Spannungsquelle 3 aus einem Akkumulator, dessen einer Anschluss über einen Widerstand für eine Stromerfassung 17 im Zwischenkreis 6 an der Leistungsstufe 7 angeschlossen ist. Die Stromerfassung 17 wird weiter unten noch erläutert.

Der andere Anschluss der Spannungsquelle 3 ist mit der Betätigungseinrichtung 4 verbunden, die hier aus einem Pfad mit einem Bedienungselement 11 in Form eines EIN-Tasters, in Reihe mit einer ersten Diode 13 und einem Widerstand 12 besteht. Parallel zu diesem ersten Pfad liegt ein Schaltkontakt 19 eines Leistungsschaltelementes 10, der mit einem Anschluss mit der Spannungsquelle 3 und mit dem anderen Anschluss mit dem Anschluss des Widerstands 12 verbunden ist, der zum Zwischenkreis 6 führt.

Das Leistungsschaltelement 10, hier in Ausführung als ein elektromechanisches Schaltelement in Form eines Relais, ist mit einem ersten Anschluss seiner Wicklung über eine zweite Diode 14 mit dem Ausgangsanschluss des Bedienungselementes 11 vor dessen Verbindung mit der ersten Diode 13 verbunden. Eine dritte Diode 15 ist zwischen dem Ausgangsanschluss des Schaltkontakts 19 und dem ersten Anschluss des Leistungsschaltelementes 10 angeschlossen. Die Funktionen der Dioden 14 und 15 werden weiter unten erläutert.

Der Zwischenkreis 6 weist einen Energiespeicher 16, hier in Form eines Kondensators, auf. Der Ausgang des Zwischenkreises 6 ist mit der Leistungsstufe 7 verbunden, welche an ihrem Ausgang in diesem Beispiel eine dreiadrige Verbindung mit dem Motor 2 besitzt.

Die Steuereinheit 5 weist Anschlüsse a bis i auf, welche im Folgenden beschrieben werden.

Anschluss a ist mit einem ersten Pol des Zwischenkreises zur Erfassung der Zwischenkreisspannung verbunden, die zwischen diesem Pol und dem anderen Pol vor dem Widerstand zur Stromerfassung 17 am Anschluss b anliegt. Anschluss c ist hinter dem Widerstand zur Stromerfassung 17 angeschlossen und dient zur Messung eines Spannungsabfalls über dem Widerstand zur Stromerfassung 17, der proportional zum Zwischenkreisstrom ist.

Anschluss d und e sind mit der Leistungsstufe 7 verbunden und symbolisieren die Steuerung der Leistungsstufe 7 durch die Steuereinheit (Anschluss e) und einen Parametererfassung, zum Beispiel Temperatur der Leistungselemente der Leistungsstufe 7 (Anschluss d). Ein Signal zu Drehzahlerfassung 18 des mit dem Motor 2 gekoppelten Generators G wird zu den Anschlüssen f geleitet.

Der Anschluss g ist mit dem Eingang des Zeitglieds 8 und dem Ausgangsanschluss des Bedienungselementes 11 verbunden. Das Ausgangssignal des Zeitglieds erhält der Anschluss h der Steuereinheit 5, wobei der Anschluss i das Freigabesignal der Steuereinheit 5 auf die Verknüpfungseinrichtung 9 führt.

Der zweite Eingang der Verknüpfungseinrichtung 9, die zum Beispiel ein logisches UND-Gatter ist, ist mit dem Ausgang des Zeitglieds 8 verbunden. Ihr Ausgang ist am zweiten Anschluss der Wicklung des Leistungsschaltelementes 10 angeschlossen.

Im Weiteren wird eine Beschreibung der Funktion der erfindungsgemäßen Steuervorrichtung in Fig. 3 zur Ausführung des erfindungsgemäßen Verfahrens erläutert.

Mit der Betätigung des Bedienungselementes 11 wird zunächst ein Mikrorechner in der Steuereinheit 5 über Anschluss g von der Spannungsquelle 3 versorgt. Ebenfalls mit dieser Betätigung wird über den Widerstand 12 das Speicherelement 16 zur Pufferung der Versorgungsspannnung mit einem auf unbedenkliche Werte begrenzten kleinen Ladestrom aufgeladen. Dieser Ladestrom ist auf keinen Fall ausreichend für den Betrieb des Motors 2, das heißt, auch bei einem fälschlicherweise erzeugten Startbefehl durch die Steuereinheit 5 über Anschluss e an die Leistungsstufe 7 kann der Antrieb nicht anlaufen, sondern fällt sofort in die automatische Unterspannungsabschaltung der Steuereinheit 5, was bekannt ist und hier nicht beschrieben wird.

Unmittelbar nach Aufladen des Kondensators 16 und durch die Steuereinheit 5 überprüfter weiterer Parameter bzw. Randbedingungen wird die Wicklung des Leistungsschaltelementes 10 bestromt, dessen Schaltkontakt 19 ausreichend für den Anlauf- und Betriebsstrom des Motors 2 ausgelegt sind. Diese erfolgt über den Freigabeanschluss i der Steuereinheit 5 und die Verknüpfungseinrichtung 9, während der andere Anschluss der Wicklung des Leistungsschaltelementes über die zweite Diode 14 mit Spannung beaufschlagt wird, solange das Bedienungselement 11 betätigt ist. Sobald der Schaltkontakt 19 geschlossen ist, erfolgt über die dritte Diode 15 eine Selbsthaltung der Wicklung des Leistungsschaltelementes 10. Diese Selbsthaltung wird über den Pfad zur Verknüpfungseinrichtung 9 solange aufrechterhalten, bis ein Ausschalten erfolgt.

Für ein Ausschalten dieses als Hauptschalter verwendeten Relais 10 werden zwei Fälle unterschieden, nämlich das normale Ausschalten und das Ausschalten bei einem Fehler. In beiden Fällen erfolgt die Abschaltung des Leistungsschaltelementes 10 zeitverzögert über das mit der Verknüpfungseinrichtung 9 verbundene Zeitglied 8, jedoch beim normalen Ausschalten gesteuert über Software von der Steuereinheit 5 und im Fehlerfall, das heißt bei Ausfall der Steuereinheit 5, durch einen vorrangig wirkende Hardware-Schaltung.

Ausschalten im normalen Betriebsfall bedeutet, dass der Anwender nach Ende eines Arbeitsgangs (Betriebspause oder dauerhaftes Ausschalten) das manuell betätigte Bedienungselement 11 in die AUS-Stellung bringt, bei diesem Beispiel in Fig. 3 loslässt. Die Steuereinheit 5 erkennt das Ausschalten über den Anschluss g und leitet sofort über Anschluss e die Schnellbremsung des Motors 2 ein. Nach Erkennen des Stillstands des Motors 2 über das Drehzahlsignal an Anschluss f unterbricht die Steuereinheit 5 das am Anschluss i anstehende Freigabesignal. Dabei wird der Selbsthaltestrompfad über die dritte Diode 15 zum Relais 10 wird unterbrochen, und das Relais 10 öffnet den Schaltkontakt 19. Eine Haltung der Wicklung des Leistungsschaltelementes 10 über die zweite Diode 14 wurde nämlich bereits beim Loslassen des Bedienungselementes 11 unterbrochen.

Dann sind alle Stromverbraucher von der Spannungsquelle 3 getrennt.

Ausschalten im Fehlerfall bedeutet, dass die Steuereinheit durch externe Störeinkopplung oder sonstige Einwirkungen in ihrer Funktion gestört bzw. beeinträchtigt ist und den Bremsvorgang und das abschließende Abschalten des Leistungsschaltelementes 10 nicht mehr steuern kann. In diesem Fall ist durch die Hardware-Schaltung über das Zeitglied 8 sichergestellt, dass nach einer vorher festgelegten bzw. einstellbaren Zeitdauer nach Start durch den Ausschaltvorgang über die Verbindung des Eingangs des Zeitglieds 8 mit dem Ausgangsanschluss des Bedienungselementes 11 das Leistungsschaltelement 10 ausgeschaltet wird, der Motor 2 frei ausläuft und ein unbeabsichtigter Wiederanlauf verhindert wird.

Bei Auftreten einer Störung wird automatisch ein normaler Ausschaltvorgang über den Freigabeanschluss i der Steuereinheit 5 ausgelöst. Ist aus technischen Gründen kein normaler Ausschaltvorgang möglich, wird das Leistungsschaltelement sofort ausgeschaltet.

Ein Neustart ist dabei erst nach Loslassen des Bedienungselementes 11 und erneuter Betätigung möglich.

Somit ist eine Steuervorrichtung eines Elektrogeräts mit hoher Sicherheit gegen unbeabsichtigtes Einschalten, Störungen im Betrieb und Ausfall der Software mit allen Vorteilen eines BLDC-Motors und in einfacher Ausführung geschaffen.

Obwohl die vorliegende Erfindung vorstehend anhand eines bevorzugten Ausführungsbeispiels beschrieben wurde, ist sie darauf nicht beschränkt, sondern auf vielfältige Art und Weise modifizierbar.

So kann zum Beispiel der Motor 2 eine zusätzliche mechanische und/oder elektromechanische Bremseinrichtung 20 besitzen, die zum Beispiel bei Ausfall der Steuereinheit 5 durch das Zeitglied 8 ausgelöst werden kann, um einen Stillstand des Motors 2 auch in diesem Fall zu gewährleisten.

Die Spannungsquelle 3 kann selbstverständlich als Netzspannungsquelle oder Akkumulator ausgeführt sein. Insbesondere bei der Ausführung als Akkumulator ist die vorliegende Erfindung besonders vorteilhaft.

Das Leistungsschaltelement 10 kann auch als eine Halbleiterschalter mit geeigneter Strombelastbarkeit und entsprechender Steuerung ausgebildet sein.

Die erste Diode 13 dient zur sicheren Funktion der Selbsthaltung und Verhindern von Rückwirkungen aus dem Zwischenkreis auf das Zeitglied 8 und den Anschluss g der Steuereinheit. Andere Schaltungsvarianten sind ebenfalls denkbar.

Das Bedienungselement 11 kann auch in einer anderen Form als Schalter oder ähnlich mit geeigneter Beschaltung ausgebildet sein.

Es ist denkbar, dass das Zeitglied 8 und die Verknüpfungseinrichtung 9 in einem integrierten Schaltkreis gemeinsam ausgebildet sind.

### Bezugszeichenliste

- 1: Elektrogerät
- 2: Motor
- 3: Spannungsquelle
- 4: Betätigungseinrichtung
- 5: Steuereinheit
- 6: Zwischenkreis
- 7: Leistungsstufe
- 8: Zeitglied
- 9: Verknüpfungseinrichtung
- 10: Leistungsschaltelement
- 11: Bedienungselement
- 12: Widerstand
- 13: Erste Diode
- 14: Zweite Diode
- 15: Dritte Diode
- 16: Energiespeicherelement
- 17: Begrenzungswiderstand
- 18: Drehzahlerfassung
- 19: Schaltkontakt
- 20: Bremseinrichtung
- a...i: Anschluss
- M: Motor
- G: Generator

## Patentansprüche

1. Steuervorrichtung eines von einer Spannungsquelle versorgten, vorzugsweise handgeführten, Elektrogerätes (1) des Heim- oder Gartenbereiches oder Fahrzeugs, mit einem elektronisch angesteuerten Motor (2), wobei die Steuervorrichtung folgendes aufweist:
- eine Betätigungseinrichtung (4) zur Ein- und Ausschaltung des Elektrogeräts (1);
- einen Zwischenkreis (6) zur Pufferung einer Versorgungsspannung der Spannungsquelle (3);
- eine Leistungsstufe (7) zur Leistungsversorgung des Motors (2);
- ein Zeitglied (8) zur Ausschaltverzögerung der Versorgungsspannung; und
- eine Steuereinheit (5) zur Steuerung des Motors (2),
wobei die Betätigungseinrichtung (4) mit einer Verknüpfungseinrichtung (9) in Verbindung steht, welche mit der Steuereinheit (5) und dem Zeitglied (8) verbunden ist.

2. Steuervorrichtung nach Anspruch 1, **dadurch gekennzeichnet, dass** die Betätigungseinrichtung (4) ein Bedienungselement (11) und ein Leistungsschaltelement (10) mit mindestens einem Schaltkontakt (19) aufweist, welche jeweils mit einem ersten Anschluss mit der Spannungsquelle (3) verbunden sind.

3. Steuervorrichtung nach Anspruch 2, **dadurch gekennzeichnet, dass** das Leistungsschaltelement (10) als elektromechanisches Bauteil oder als ein Halbleiterschalter ausgebildet ist.

4. Steuervorrichtung nach Anspruch 2 oder 3, **dadurch gekennzeichnet, dass** das Bedienungselement (11) mit seinem zweiten Anschluss über einen Widerstand (12) mit dem Zwischenkreis (4) verbunden ist.

5. Steuervorrichtung nach Anspruch 4, **dadurch gekennzeichnet, dass** der Schaltkontakt (19) des Leistungsschaltelements (10) mit seinem zweiten Anschluss mit der Verbindung des Widerstands (12) mit dem Zwischenkreis (4) zur Überbrückung des Bedienungselements (11) und des Widerstands (12) verbunden ist.

6. Steuervorrichtung nach einem der Ansprüche 2 bis 5, **dadurch gekennzeichnet, dass** das Leistungsschaltelement (10) mit einem Anschluss über eine Diode (14) mit dem zweiten Anschluss des Bedienungselementes (11) und über eine Diode (15) mit dem Zwischenkreis (4) verbunden ist.

7. Steuervorrichtung nach einem der Ansprüche 1 bis 6, **dadurch gekennzeichnet, dass** das Leistungsschaltelement (10) der Betätigungseinrichtung (4) von der Steuereinheit (5) und von dem Zeitglied (8) ausschaltbar ist.

8. Steuervorrichtung nach Anspruch 7, **dadurch gekennzeichnet, dass** das Leistungsschaltelement (10) der Betätigungseinrichtung (4) über das Zeitglied (8) bei fehlerhafter Steuereinheit (5) ausschaltbar ist.

9. Steuervorrichtung nach Anspruch 8, **dadurch gekennzeichnet, dass** die Steuereinheit (5) eine Spannung des Zwischenkreises (6) und den in ihm fließenden Strom erfasst.

10. Steuervorrichtung nach einem der Ansprüche 1 bis 9, **dadurch gekennzeichnet, dass** der Motor (2) eine Bremseinrichtung (20) aufweist, die von der Steuereinheit (5) und/oder von dem Zeitglied (8) steuerbar ist.

11. Verfahren zum Betreiben einer Steuervorrichtung nach einem der vorstehenden Ansprüche, mit folgenden Verfahrensschritten:
a. Betätigen einer Betätigungseinrichtung (4) zum Einschalten des Elektrogeräts (1);
b. Freigeben und Einschalten eines Leistungsschaltelementes (10) der Betätigungseinrichtung (4) durch eine Steuereinheit (5);
c. Starten des Motors (2) durch die Steuereinheit (5) über eine Leistungsstufe (7);
d. Betätigen der Betätigungseinrichtung (4) zum Ausschalten des Elektrogeräts (1);
e. Bremsen des Motors (2) durch die Steuereinheit (5) über die Leistungsstufe (7); und
f. Ausschalten des Leistungsschaltelementes (10) der Betätigungseinrichtung (4).

12. Verfahren nach Anspruch 11, **dadurch gekennzeichnet, dass** beim Einschalten ein Aufladen eines Zwischenkreises (6) zum Puffern einer Versorgungsspannung der Spannungsquelle (3) erfolgt, wobei ein Speicherelement (16), vorzugsweise ein Kondensator, mit einem über einen Widerstand (12) begrenzten Strom aufgeladen wird.

13. Verfahren nach Anspruch 11 oder 12, **dadurch gekennzeichnet, dass** das Starten des Motors (2) erst dann erfolgt, wenn eine Spannung des Zwischenkreises (6) erfasst worden ist.

14. Verfahren nach einem der Ansprüche 11 bis 13, **dadurch gekennzeichnet, dass** bei der Betätigung der Betätigungseinrichtung (4) zum Ausschalten des Elektrogeräts (1) das Zeitglied (8) gestartet wird.

15. Verfahren nach einem der Ansprüche 11 bis 14, **dadurch gekennzeichnet, dass** weiterhin ein Bremsen des Motors (2) und ein Ausschalten des Leistungsschaltelementes (10) durch die Steuereinheit (5) erfolgen, wenn eine Störung auftritt.

16. Verfahren nach Anspruch 15, **dadurch gekennzeichnet, dass** beim Ausschalten des Leistungsschaltelementes (10) durch das Zeitglied (8) eine Bremseinrichtung (20) des Motors (2) aktiviert wird.
